(19) Europäisches Patentamt
European Patent Office
Office européen des brevets

(11) EP 4 459 504 A1

(12) EUROPEAN PATENT APPLICATION
published in accordance with Art. 153(4) EPC

(43) Date of publication:
06.11.2024 Bulletin 2024/45

(51) International Patent Classification (IPC):
*G06N 3/04* (2023.01)

(21) Application number: 22915035.4

(22) Date of filing: 29.12.2022

(52) Cooperative Patent Classification (CPC):
G06N 3/04; G06N 3/08

(86) International application number:
PCT/CN2022/143324

(87) International publication number:
WO 2023/125785 (06.07.2023 Gazette 2023/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.12.2021 CN 202111635076

(71) Applicant: Hangzhou Hikvision Digital
Technology Co., Ltd.
Hangzhou, Zhejiang 310051 (CN)

(72) Inventors:
• YANG, Xichao
Hangzhou, Zhejiang 310051 (CN)
• ZHANG, Yuan
Hangzhou, Zhejiang 310051 (CN)
• XIE, Di
Hangzhou, Zhejiang 310051 (CN)
• PU, Shiliang
Hangzhou, Zhejiang 310051 (CN)

(74) Representative: Epping - Hermann - Fischer
Patentanwaltsgesellschaft mbH
Schloßschmidstraße 5
80639 München (DE)

(54) **DATA PROCESSING METHOD, NETWORK TRAINING METHOD, ELECTRONIC DEVICE, AND STORAGE MEDIUM**

(57) Embodiments of the present application provide a data processing method, a network training method, an electronic device and a storage medium. The method includes: obtaining input data of a network layer of a deep neural network, where an original weight of the network layer is decomposed into N sub-weights that have been quantization processed; convolving the input data with N sub-weights respectively to obtain N intermediate data corresponding to the N sub-weights; summing the N intermediate data to obtain output data of the network layer. In this way, the original weight of the network layer is decomposed into N sub-weights that have been quantization processed, by adjusting the value of N, the efficiency and performance of the network can be flexibly balanced.

obtaining input data of a network layer of a deep neural network, an original weight of the network layer is decomposed into N sub-weights that have been quantization processed — S11

convolving the input data with the N sub-weights respectively to obtain N intermediate data corresponding to the N sub-weights — S12

summing the N intermediate data to obtain output data of the network layer — S13

FIG. 1

## Description

The present application claims the priority to a Chinese patent application No. 202111635076.8 filed with the China National Intellectual Property Administration on December 29, 2021 and entitled "DATA PROCESSING METHOD, NETWORK TRAINING METHOD, ELECTRONIC DEVICE AND STORAGE MEDIUM", which is incorporated herein by reference in its entirety.

## TECHNICAL FIELD

The present application relates to the field of computer technology, in particular relates to a data processing method, a network training method, an electronic device and a storage medium.

## BACKGROUND

With the development of computer technology, deep neural networks are widely used in application scenarios such as image denoising, face recognition, and live verification. However, computational amount of the deep neural network is particularly massive, and the huge computational amount limits the application scenarios of the deep neural network. In the application scenarios where terminal computing capacity is limited, it is an effective means to reduce the computational amount of the deep neural network by using quantitative means.

However, at present, when quantizing a deep neural network, the weight of each network layer in the deep neural network is quantized by using a uniform specification, such as 2 bit, 4 bit or 8 bit. This makes the design of deep neural network less flexible and unable to flexibly balance the efficiency and performance of the network.

## SUMMARY

The purpose of embodiments of the present application is to provide a data processing method, a network training method, an electronic device, and a storage medium, so as to flexibly balance the efficiency and performance of the network. The specific technical solutions are as follows:

In a first aspect, an embodiment of the present application provides a data processing method, which includes:

obtaining input data of a network layer of a deep neural network, an original weight of the network layer is decomposed into N sub-weights that have been quantization processed;
convolving the input data with the N sub-weights respectively to obtain N intermediate data corresponding to the N sub-weights;
summing the N intermediate data to obtain output data of the network layer.

Optionally, the sub-weight is a value obtained by multiplying a quantization weight corresponding to the sub-weight by a first scale coefficient;
the step of convolving the input data with the N sub-weights respectively to obtain N intermediate data corresponding to the N sub-weights includes:

performing a quantization processing on the input data to obtain quantized data and a second scale coefficient corresponding to the input data;
convolving the quantized data with the quantization weights corresponding to the N sub-weights respectively to obtain N convolution data corresponding to the N sub-weights;
multiplying each convolution data by the first scale coefficient and the second scale coefficient respectively to obtain N intermediate data corresponding to the N sub-weights.

Optionally, the quantization weight consists of -1, 0 and 1;
a difference between a sum of the N sub-weights and the original weight is less than a preset threshold, or, a ratio of the sum of the N sub-weights to the original weight is less than a preset ratio.

Optionally, the input data of the deep neural network is a first image, the output data of the deep neural network is a second image, and noise level of the first image is higher than that of the second image.

In a second aspect, an embodiment of the present application provides a network training method, which includes:

obtaining a training set, wherein the training set includes sample data and expected data corresponding to the sample data;

inputting the sample data into a first deep neural network to obtain first predicted data, wherein the first deep neural network includes at least one network layer;

determining a first loss value based on the expected data and the first predicted data;

decomposing an original weight of each network layer into N sub-weights that have been quantization processed to obtain a second deep neural network if it is determined based on the first loss value that the first deep neural network is converged.

Optionally, the method further includes:

adjusting a first parameter of the first deep neural network and re-executing the step of inputting the sample data into the first deep neural network to obtain first predicted data if it is determined based on the first loss value that the first deep neural network is not converged; wherein the first parameter includes the original weight.

Optionally, after obtaining the second deep neural network, the method further includes:

inputting the sample data into the second deep neural network to obtain second predicted data;

determining a second loss value based on the expected data and the second predicted data;

ending a training of the second deep neural network if it is determined based on the second loss value that the second deep neural network is converged;

adjusting a second parameter of the second deep neural network, and re-executing the step of inputting the sample data into the second deep neural network to obtain second predicted data if it is determined based on the second loss value that the second deep neural network is not converged, wherein the second parameter includes scale coefficients of the N sub-weights.

Optionally, the sub-weight is a value obtained by multiplying a quantization weight corresponding to the sub-weight by a scale coefficient of the sub-weight, and the quantization weight consists of -1, 0 and 1;

a difference between a sum of the N sub-weights and the original weight is less than a preset threshold, or, a ratio of the sum of the N sub-weights to the original weight is less than a preset ratio.

In a third aspect, an embodiment of the present application provides a data processing apparatus, which includes:

an obtaining unit, configured for obtaining input data of a network layer of a deep neural network, an original weight of the network layer is decomposed into N sub-weights that have been quantization processed;

a convolution unit, configured for convolving the input data with the N sub-weights respectively to obtain N intermediate data corresponding to the N sub-weights;

a summation unit, configured for summing the N intermediate data to obtain output data of the network layer.

Optionally, the sub-weight is a value obtained by multiplying a quantization weight corresponding to the sub-weight by a first scale coefficient;

the convolution unit is specifically configured for:

performing a quantization processing on the input data to obtain quantized data and a second scale coefficient corresponding to the input data;

convolving the quantized data with the quantization weights corresponding to the N sub-weights respectively to obtain N convolution data corresponding to the N sub-weights;

multiplying each convolution data by the first scale coefficient and the second scale coefficient respectively to obtain N intermediate data corresponding to the N sub-weights.

Optionally, the quantization weight consists of -1, 0 and 1;

a difference between a sum of the N sub-weights and the original weight is less than a preset threshold, or, a ratio of the sum of the N sub-weights to the original weight is less than a preset ratio.

Optionally, the input data of the deep neural network is a first image, the output data of the deep neural network is a second image, and noise level of the first image is higher than that of the second image.

In a fourth aspect, an embodiment of the present application provides a network training apparatus, which includes:

an obtaining unit, configured for obtaining a training set, wherein the training set includes sample data and expected data corresponding to the sample data;

a first input unit, configured for inputting the sample data into a first deep neural network to obtain first predicted data, wherein the first deep neural network includes at least one network layer;

a first determining unit, configured for determining a first loss value based on the expected data and the first predicted data;

a decomposing unit, configured for decomposing an original weight of each network layer into N sub-weights that have been quantization processed to obtain a second deep neural network if it is determined based on the first loss value that the first deep neural network is converged.

Optionally, the apparatus further includes:
a first adjustment unit, configured for adjusting a first parameter of the first deep neural network and re-executing the step of inputting the sample data into the first deep neural network to obtain first predicted data if it is determined based on the first loss value that the first deep neural network is not converged; wherein the first parameter includes the original weight.

Optionally, the apparatus further includes:

a second input unit, configured for inputting the sample data into the second deep neural network to obtain second predicted data after obtaining the second deep neural network;

a second determining unit, configured for determining a second loss value based on the expected data and the second predicted data;

an ending unit, configured for ending a training of the second deep neural network if it is determined based on the second loss value that the second deep neural network is converged;

a second adjustment unit, configured for adjusting a second parameter of the second deep neural network, and re-executing the step of inputting the sample data into the second deep neural network to obtain second predicted data if it is determined based on the second loss value that the second deep neural network is not converged, wherein the second parameter includes scale coefficients of the N sub-weights.

Optionally, the sub-weight is a value obtained by multiplying the quantization weight corresponding to the sub-weight by a scale coefficient of the sub-weight, and the quantization weight consists of -1, 0 and 1;
a difference between a sum of the N sub-weights and the original weight is less than a preset threshold, or, a ratio of the sum of the N sub-weights to the original weight is less than a preset ratio.

In a fifth aspect, an embodiment of the present application provides an electronic device including a processor and a machine-readable storage medium, the machine-readable storage medium storing machine-executable instructions that can be executed by the processor, when executed, the machine-executable instructions causes the processor to: implement the steps of the data processing method described in any of the above aspects or the steps of the network training method described in any of the above aspects.

In a sixth aspect, an embodiment of the present application provides a computer-readable storage medium storing a computer program product therein, which, when executed by a processor, the computer program product causes the processor to implement the steps of the data processing method described in any of the above aspects or the steps of the network training method described in any of the above aspects.

In a seventh aspect, an embodiment of the present application provides a computer program product containing instructions, when running on a computer, the instructions cause the computer to carry out the steps of the data processing method described in any of the above aspects or the steps of the above-mentioned network training method described in any of the above aspects.

Beneficial effects of the embodiments of the present application:
In the technical solutions provided by the embodiments of the present application, the original weight of the network layer is decomposed into N sub-weights, and the N sub-weights have been quantized. Compared to being convolved with an unquantized original weight, convolving the input data of the network layer with N quantized sub-weights respectively can reduce the consumption of computing resources and expand application scenarios of the deep neural network. Furthermore, the deep neural network includes multiple network layers, and the number of sub-weights obtained by decomposing the original weight of each network layer may be different, that is, the number N of the sub-weights obtained by decomposing the original weight of each network layer can be set according to actual demands, which greatly improves the flexibility of the deep neural network design and can flexibly balance the efficiency and performance of the network.

Of course, it is not necessary for any product or method implementing the present application to achieve all the advantages described above simultaneously.

**BRIEF DESCRIPTION OF THE DRAWINGS**

In order to more clearly describe the technical solutions of the embodiments of the present application and the prior art, accompanying drawings that need to be used in the embodiments and the prior art will be briefly described below. Obviously, the accompanying drawings described below are for only some of embodiments of the present application. Those skilled in the art may further obtain other embodiments based on these accompanying drawings.

Figure 1 is a first schematic flow chart of a data processing method provided by an embodiment of the present application;

Figure 2 is a schematic diagram of an original weight being decomposed into sub-weights composed of three values of -1, 0 and 1 provided by an embodiment of the present application;

Figure 3 is a second schematic flow chart of a data processing method provided by an embodiment of the present application;

Figure 4 is a third schematic flow chart of a data processing method provided by an embodiment of the present application;

Figure 5 is a first schematic flow chart of a network training method provided by an embodiment of the present application;

Figure 6 is a second schematic flow chart of a network training method provided by an embodiment of the present application;

Figure 7 is a third schematic flow chart of a network training method provided by an embodiment of the present application;

Figure 8 is a schematic structural diagram of data processing apparatus provided by an embodiment of the present application;

Figure 9 is a schematic structural diagram of network training apparatus provided by an embodiment of the present application;

Figure 10 is a first structural schematic diagram of an electronic device for implementing the data processing method provided by an embodiment of the present application;

Figure 11 is a second structural schematic diagram of an electronic device for implementing the network training method provided by an embodiment of the present application.

## DETAILED DESCRIPTION

The technical solutions in the embodiments of the present application will be clearly and completely described below with reference to the accompanying drawings in the embodiments of the present application. Obviously, the described embodiments are only some, and not all, of the embodiments of the present application. All other embodiments obtained based on the embodiments of the present application by those skilled in the art fall into the scope of protection of the application.

In the related prior art, when quantizing a deep neural network, the weight of each network layer in the deep neural network is quantized by using a uniform specification. This makes the design of deep neural network less flexible, and unable to flexibly balance the efficiency and performance of the network.

In addition, if the weight of each network layer in a deep neural network is quantized with low-bit specifications by using a uniform specification, and the data is processed with a highly sensitive network layer, it will cause the loss of effective data; if the weight of each network layer in the deep neural network is quantized with high-bit specifications by using a uniform specification, and the data is processed with a low sensitive network layer, it will lead to a waste of computing resources.

In order to solve the above problems, an embodiment of the present application provides a data processing method, which can be applied to electronic devices with deep neural networks such as servers, personal computers, mobile phones or tablets. For ease of understanding, the following description takes the electronic device as an execution entity but not limit it.

In addition, in the embodiments of the present application, the deep neural network may include multiple network layers, and each network layer performs the method respectively. The following description only takes one network layer as an example but not limit it.

A data processing method provided by the embodiments of the present application will be described in detail below through specific embodiments.

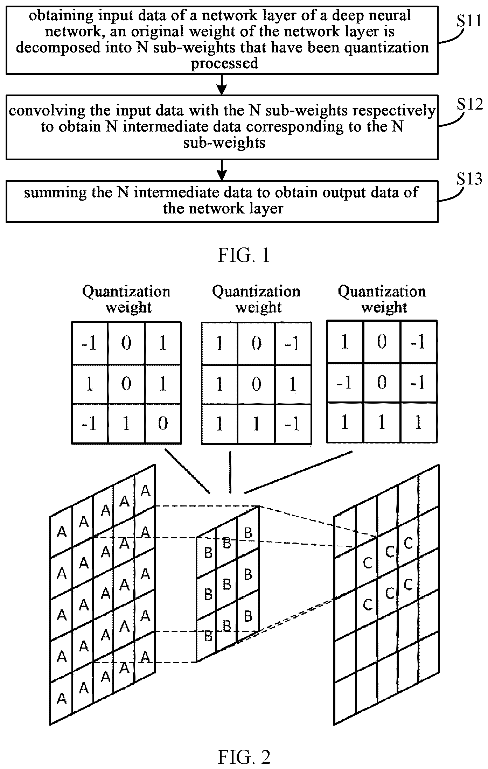

Figure 1 is a first schematic flow chart of a data processing method provided by an embodiment of the present application. The data processing method includes the following steps.

Step S11, obtaining input data of a network layer of a deep neural network, an original weight of the network layer is decomposed into N sub-weights that have been quantization processed.

In the embodiment of the present application, the deep neural network may be a convolutional neural network, a deep convolutional neural network, or other neural networks, which is not limited.

For each network layer of the deep neural network, the electronic device obtains the input data of the network layer. Since positions of the network layers in the deep neural network are different, the input data of the network layer can be input data for the deep neural network, or it can be output data of a previous network layer in this deep neural network, which is not limited.

In the embodiment of the present application, an original weight of one network layer is decomposed into N sub-weights that have been quantization processed. Correspondingly, a single convolution of the network layer is also decomposed into N sub-convolutions.

Wherein, the electronic device can set the value of N based on sensitivity of the network layer. The higher the sensitivity of the network layer is, the larger the value of N is; conversely, the smaller the sensitivity of the network layer is, the smaller the value of N is.

Step S12, convolving the input data with the N sub-weights respectively to obtain N intermediate data corresponding to the N sub-weights.

In the embodiment of the present application, for each sub-weight, the electronic device convolves the input data with this sub-weight, that is to say, the electronic device multiplies the input data and each element in this sub-weight, and adds resulting product values to obtain one intermediate data corresponding to the sub-weight.

In the embodiment of the present application, the original weight of the network layer is decomposed into N sub-weights. Therefore, the electronic device obtains a total of N intermediate data.

Step S13, summing the N intermediate data to obtain output data of the network layer.

The electronic device sums the N intermediate data to obtain the output data of the network layer. If the network layer is the last layer of the deep neural network, the output data of the network layer can be used as final output data of the deep neural network; if the network layer is the first layer or an intermediate layer of the deep neural network, the output data of the network layer can be used as input data of a next network layer of the network layer in the deep neural network. The flow of processing the input data by the next network layer can be referred to the description of steps S11-S13.

In the technical solution provided by the embodiments of the present application, the original weight of the network layer is decomposed into N sub-weights, and the N sub-weights have been quantized. Compared to being convolved with an unquantized original weight, convolving the input data of the network layer with quantized N sub-weights respectively can reduce the consumption of computing resources and expand application scenarios of the deep neural network. Furthermore, the deep neural network includes multiple network layers, and the number of sub-weights obtained by decomposing the original weight of each network layer may be different, that is, the number N of the sub-weights obtained by decomposing the original weight of each network layer can be set according to actual demands, which greatly improves the flexibility of the deep neural network design and can flexibly balance the efficiency and performance of the network.

The technical solution provided by the embodiments of the present application can be applied to application scenarios such as image denoising or face recognition, and the technical solution provided by the embodiments of the present application applied in different application scenarios differs in that the input data and output data of the network layer are different. For example, when the technical solution provided by the embodiments of the present application is applied in different image denoising scenarios, the input data of the deep neural network is a first image, the output data of the deep neural network is a second image, and the noise level of the first image is higher than that of the second image.

In an embodiment of the present application, the sub-weight obtained by decomposing the original weight is a value obtained by multiplying a quantization weight corresponding to the sub-weight by a first scale coefficient. For example, the quantization weight of the sub-weight i is represented by Ti, and the first scale coefficient is represented by $\alpha i$, then the sub-weight i can be represented by $(Ti*\alpha i)$, and the value range of i is 1~N. At this time, the original weight $W_f$ can be expressed as: $T1*\alpha 1 + T2*\alpha 2 + ... + TN*\alpha N$.

In the embodiment of the present application, a difference between a sum of the N sub-weights that have been quantization processed and the original weight is less than a preset threshold, or a ratio of the sum of N sub-weights that have been quantization processed to the original weight is less than a preset ratio, etc.. The preset threshold and the preset ratio can be set according to actual demands, as long as the negative impact of decomposition on a final output result is minimized. The method for decomposing the original weight is not specifically limited in the embodiments of the present application.

In an optional embodiment, the method for decomposing the original weight may be performed in such a way that the sum of the decomposed N sub-weights approximately equal to the original weight $W_f$, that is, $W_f \approx T1*\alpha 1 + T2*\alpha 2 + ... + TN*\alpha N$.

In the embodiment of the present application, the quantization weights of different sub-weights may be different or the same; first scale coefficients of different sub-weights may be different or the same.

In the embodiment of the present application, the quantization weight is an integer. For example, the quantization weight may include but is not limited to -1, 1, 2, 3, or 4, etc., which is not limited. The first scale coefficient is a floating point number or an integer, and can be determined according to an actual situation.

In an optional embodiment, the quantization weight consists of -1, 0 and 1. For example, N is 3, that is, the original weight of the network layer is decomposed into 3, and the size of the convolution kernel is 3*3, then one original weight can be decomposed into 3 sub-weights, and the quantization weights corresponding to these 3 sub-weights are as shown in the figure 2. The quantization weight consists of three values, i.e., -1, 0 and 1. This quantization weight can further be referred to as a ternary weight.

In the embodiment of the present application, the quantization weight may consist of -1, 0 and 1. In this case, the electronic device uses the quantization weight to perform convolution processing. The process of convolution processing can effectively avoid multiplication operations, thereby improving the computing efficiency, improving the operation efficiency of hardware and reducing the consumption of computing resources.

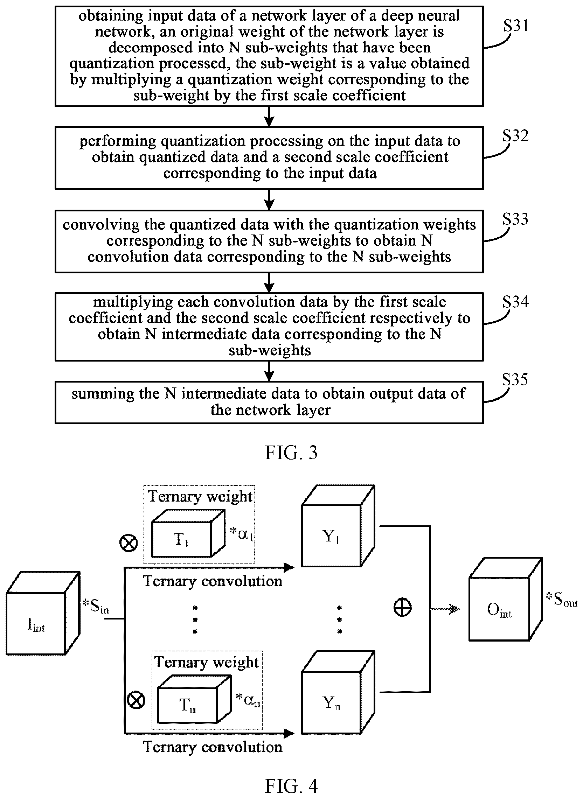

Based on the above sub-weights that have been quantization processed, an embodiment of the present application further provides a data processing method, as shown in Figure 3, in this method, steps S31 and S35 are the same as steps S11 and S13. Steps S32-S34 are implementations of step S12.

Step S32, performing a quantization processing on the input data to obtain quantized data corresponding to the input data and a second scale coefficient.

In the embodiment of the present application, after obtaining the input data, the electronic device can perform a quantification processing on the input data to obtain the quantized data corresponding to the input data and the second scale coefficient. The quantization specification of the input data can be set according to the actual situation, such as 2bit, 4bit or 8bit, etc., which is not limited.

The quantized data corresponding to the input data is represented by $I_{int}$, and the second scale coefficient is represented by $S_{in}$, then the input data can be expressed as $I_{int}*S_{in}$.

Step S33, convolving the quantized data with the quantization weights corresponding to the N sub-weights to obtain N convolution data corresponding to the N sub-weights.

In the embodiment of the present application, for each sub-weight, the electronic device performs a convolution processing on the quantized data $I_{int}$ and the quantization weight corresponding to the sub-weight, and the convolution data corresponding to the sub-weight can be obtained. For example, the convolution process is represented by a symbol $\otimes$, the quantized data corresponding to the input data is represented by $I_{int}$, and the quantization weight of the sub-weight i is represented by $T_i$, then the convolution data corresponding to the sub-weight i can be expressed by an expression $(I_{int}\otimes T_i)$.

Step S34: multiplying each convolution data by the first scale coefficient and the second scale coefficient respectively to obtain N intermediate data corresponding to the N sub-weights.

In the embodiment of the present application, the intermediate data corresponding to the sub-weight i can be represented by Yi. For the sub-weight i, the electronic device multiplies the convolution data $(I_{int}\otimes T_i)$ corresponding to the sub-weight i with the first scale coefficient $S_{in}$ and the second scale coefficient $\alpha i$ respectively, and one expression of Yi can be obtained as follows:

$$Y_i = (I_{int} \otimes T_i) * S_{in} * \alpha i \qquad (1)$$

wherein $S_{in}$ and $\alpha i$ are constants, $\otimes$ represents the convolution process of multiplying and then adding. Placing the constants $S_{in}$ and $\alpha i$ inside and outside the brackets will not affect the results.

Therefore, the formula (1) can be transformed to obtain another expression of Yi as follows:

$$Y_i = (I_{int} * S_{in}) \otimes (T_i * \alpha i) \qquad (2)$$

In the above expression, $(I_{int}*S_{in})$ represents the input data, $(T_i*\alpha i)$ represents the sub-weight. Therefore, the above expression can represent convolving the input data with N sub-weights respectively to obtain N intermediate data corresponding to the N sub-weights.

In the technical solution of the embodiment of the present application, the electronic device performs quantization processing on both the input data and the sub-weights, and uses the quantized data to perform convolution operations, which improves the computing efficiency of data processing, improves the operation efficiency of hardware, and reduces the consumption of computing resources.

The data processing method provided by the embodiment of the present application will be described in detail below with reference to the schematic flow chart of the data processing method shown in FIG. 4. Wherein, the original weight is decomposed into n sub-weights, and the quantization weight of the sub-weight consists of three values {-1, 0, 1}, that is, the quantization weight is a ternary weight. Correspondingly, the convolution of the network layer is decomposed into a ternary convolution. In Figure 4, the convolution process is represented by a symbol $\otimes$, and $\oplus$ represents the addition of corresponding elements.

The electronic device quantizes the input data to obtain quantized data $I_{int}$ corresponding to the input data and a second scale coefficient $S_{in}$. The electronic device performs a convolution processing (further referred to as a ternary convolution processing) on the input data after been quantized $(I_{int}*S_{in})$ with n ternary weights $(T_i*\alpha i)$ decomposed from

the original weight. As shown in the above formula (2), n intermediate data $Y_i$ corresponding to n ternary weights are obtained, wherein i = 1,..., n. The electronic device performs a summation processing on n intermediate data $Y_i$, that is, performs a $\oplus$ processing, to obtain output data of the network layer. The quantized output data is ($O_{int}*S_{out}$), wherein $O_{int}$ is quantized data corresponding to the output data, $S_{out}$ is a third scale coefficient.

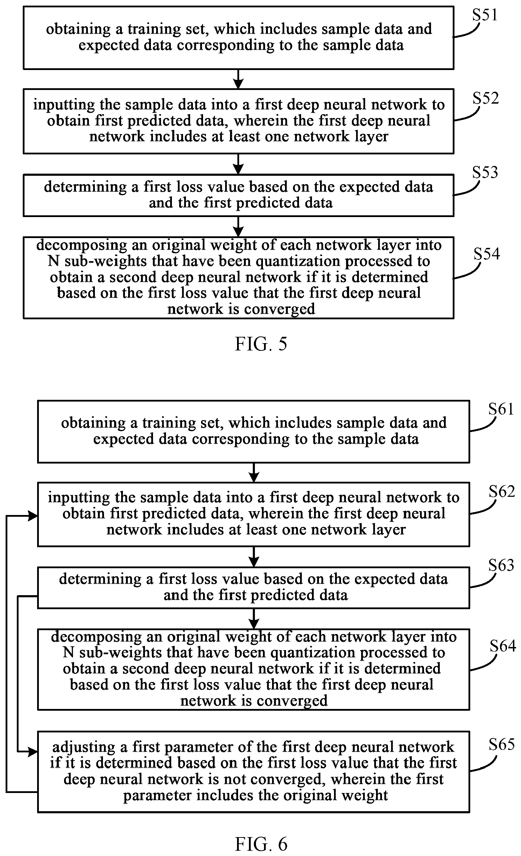

Corresponding to the above data processing method, an embodiment of the present application further provides a network training method, as shown in Figure 5, the method may include the following steps:
Step S51, obtaining a training set, wherein the training set includes sample data and expected data corresponding to the sample data.

In the embodiment of the present application, the number of sample data included in the training set can be set according to actual demands. For example, if the accuracy required by the network is high, the number of the sample data can be set to a larger value; if the performance of the electronic device is poor, the number of the sample data can be set to a smaller value.

In the embodiment of the present application, the training set may be a data set pre-stored in the electronic device, or may be a data set obtained by the electronic device from a preset database, which is not limited.

Step S52, inputting the sample data into a first deep neural network to obtain first predicted data, wherein the first deep neural network includes at least one network layer.

In step S52, the original weight of the network layer of the first deep neural network is not decomposed. The electronic device inputs the sample data into the first deep neural network, and after processing the input data, the first deep neural network outputs the first predicted data.

Step S53, determining a first loss value based on the expected data and the first predicted data.

In the embodiment of the present application, the electronic device can calculate the difference between the expected data corresponding to the sample data and the first predicted data, and taking the difference as the first loss value.

The electronic device can further take a Mean Squared Error (MSE) function as a loss function, and determine the first loss value by using the expected data corresponding to the sample data and the first predicted data.

In the embodiment of the present application, the electronic device may further use other algorithms to determine the first loss value, which is not limited.

Step S54, decomposing an original weight of each network layer into N sub-weights that have been quantization processed to obtain a second deep neural network if it is determined based on the first loss value that the first deep neural network is converged.

In the embodiment of the present application, the electronic device can preset a loss threshold, that is, a preset loss threshold. If the determined the first loss value is less than the preset loss threshold, the electronic device can determine that the first deep neural network is converged, and end the training of the first deep neural network, and then decompose the original weight of each network layer in the first deep neural network into N sub-weights that have been quantization processed to obtain the second deep neural network.

Wherein, the method and principles for decomposing the original weight can be referred to the relevant descriptions described above with respect to Figures 1-4.

In an optional embodiment, a sub-weight is a value obtained by multiplying a quantization weight corresponding to the sub-weight by a scale coefficient (such as the first scale coefficient), the quantization weight consists of -1, 0 and 1; the difference between the sum of the N sub-weights that have been quantization processed and the original weight is less than a preset threshold, and the ratio of the sum of the N sub-weights that have been quantization processed to the original weight is less than a preset ratio.

In the technical solution provided by the embodiment of the present application, in the case that the original weight of the network layer is not decomposed, the electronic device trains the first deep neural network with the training set. After the training of the first deep neural network is end, the electronic device decomposes the original weight of the network layer into N sub-weights that have been quantization processed. In the technical solution provided by the embodiment of the present application, the deep neural network can fully learn the data regularity of the sample data, which improves the accuracy of the data processing of the deep neural network, and since that the original weight of the network layer is not decomposed when the first deep neural network is training, only the original weight is the weight being adjusted when training the first deep neural network, rather than N sub-weights, which reduces parameters to be adjusted and improves the training efficiency.

Based on the above network training method, an embodiment of the present application further provides a network training method, as shown in Figure 6, in this method, steps S61-S64 are the same as steps S51-S54, which will not be described again.

Step S65, adjusting a first parameter of the first deep neural network and re-execute step S62 if it is determined based on the first loss value that the first deep neural network is not converged; wherein the first parameter includes the original weight.

In the embodiment of the present application, the electronic device may use a back propagation algorithm or a gradient descent algorithm to adjust the first parameter of the first deep neural network, and re-execute step S62 to continue a iterative training of the first deep neural network, until it is determined that the first deep neural network is converged.

Since the first parameter of the first deep neural network is adjusted, the first deep neural network will change after the parameter is adjusted. At this point the sample data is re-input into the first deep neural network, and the first predicted data output by the first deep neural network will change. This is a process of repeated training, and an end condition is that the first deep neural network is converged.

In the technical solution provided by the embodiment of the present application, in the case that the original weight of the network layer is not decomposed, the electronic device trains the first deep neural network with the training set. After the training of the first deep neural network is end, the electronic device decomposes the original weight of the network layer into N sub-weights that have been quantization processed. Since that the original weight of the network layer is not decomposed when the first deep neural network is training, only the original weight is the weight being adjusted when training the first deep neural network, rather than N sub-weights, which reduces parameters to be adjusted and improves the training efficiency.

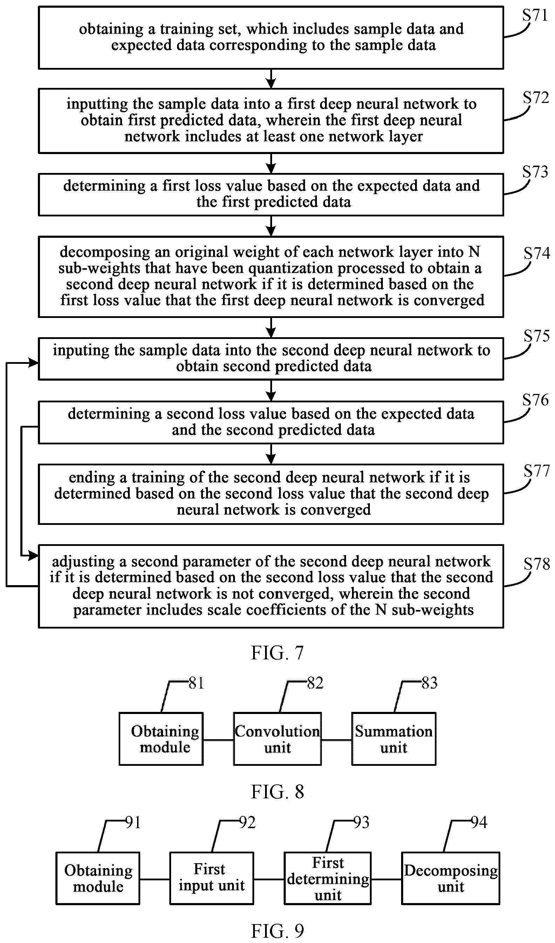

In order to further improve the accuracy of data processing of the deep neural network, an embodiment of the present application further provides a network training scheme, as shown in Figure 7, in this method, steps S71-S74 are the same as steps S51-S54.

Step S75, inputting the sample data into the second deep neural network to obtain second predicted data. The specific implementation of step S75 can be referred to the relevant description of step S52.

Step S76, determining a second loss value based on the expected data and the second predicted data. The specific implementation of step S76 can be referred to the relevant description of step S53.

Step S77, ending a training of the second deep neural network if it is determined based on the second loss value that the second deep neural network is converged. The specific implementation of step S77 can be referred to the relevant description of step S54.

Step S78, adjusting a second parameter of the second deep neural network, and re-executing the step of inputting the sample data into the second deep neural network to obtain the second predicted data if it is determined based on the second loss value that the second deep neural network is not converged, wherein the second parameter includes scale coefficients of the N sub-weights. Step S75 can be referred to the relevant description of step S65.

The description of steps S75 to S78 in Figure 7 is relatively simple, which can be referred to the relevant descriptions of above Figures 5-6, and will not be described again.

In the technical solution provided by the embodiment of the present application, the electronic device obtains the second deep neural network after decomposing the original weight into N sub-weights, and then uses the training set to re-train the second deep neural network, and fine-tunes the sub-weights, which, in the case that the training efficiency is high, reduces the error caused by the original weight decomposition, and further improves the accuracy of data processing of the deep neural network.

Corresponding to the above data processing method, an embodiment of the present application further provide a data processing apparatus, as shown in Figure 8, the apparatus includes:

an obtaining unit 81, configured for obtaining input data of a network layer of a deep neural network, wherein an original weight of the network layer is decomposed into N sub-weights that have been quantization processed;

a convolution unit 82, configured for convolving the input data with the N sub-weights respectively to obtain N intermediate data corresponding to the N sub-weights;

a summation unit 83, configured for summing the N intermediate data to obtain output data of the network layer.

In an optional embodiment, the sub-weight is a value obtained by multiplying a quantization weight corresponding to the sub-weight by a first scale coefficient;
the convolution unit 82 can be specifically configured for:

performing a quantization processing on the input data to obtain quantized data and a second scale coefficient corresponding to the input data;

convolving the quantized data with the quantization weights corresponding to the N sub-weights respectively to obtain N convolution data corresponding to the N sub-weights;

multiplying each convolution data by the first scale coefficient and the second scale coefficient respectively to obtain N intermediate data corresponding to the N sub-weights.

In an optional embodiment, the quantization weight consists of -1, 0 and 1;
a difference between a sum of the N sub-weights and the original weight is less than a preset threshold, or, a ratio of the sum of the N sub-weights to the original weight is less than a preset ratio.

In an optional embodiment, the input data of the deep neural network is a first image, the output data of the deep neural network is a second image, and the noise level of the first image is higher than that of the second image.

Corresponding to the above network training method, an embodiment of the present application further provides a network training apparatus, as shown in Figure 9, the apparatus includes:

an obtaining unit 91, configured for obtaining a training set, wherein the training set includes sample data and expected data corresponding to the sample data;

a first input unit 92, configured for inputting the sample data into a first deep neural network to obtain first predicted data, wherein the first deep neural network includes at least one network layer;

a first determining unit 93, configured for determining a first loss value based on the expected data and the first predicted data;

a decomposing unit 94, configured for decomposing an original weight of each network layer into N sub-weights that have been quantization processed to obtain a second deep neural network if it is determined based on the first loss value that the first deep neural network is converged.

In an optional embodiment, the above network training apparatus may further include:
a first adjustment unit, configured for adjusting a first parameter of the first deep neural network and re-executing the step of inputting the sample data into the first deep neural network again to obtain the first predicted data if it is determined based on the first loss value that the first deep neural network is not converged; wherein the first parameter includes the original weight.

In an optional embodiment, the above network training apparatus may further include:

a second input unit, configured for inputting the sample data into the second deep neural network to obtain second predicted data after obtaining the second deep neural network;

a second determining unit, configured for determining a second loss value based on the expected data and the second predicted data;

an ending unit, configured for ending a training of the second deep neural network if it is determined based on the second loss value that the second deep neural network is converged;

a second adjustment unit, configured for adjusting a second parameter of the second deep neural network, and re-executing the step of inputting the sample data into the second deep neural network to obtain second predicted data if it is determined based on the second loss value that the second deep neural network is not converged, wherein the second parameter includes scale coefficients of the N sub-weights.

In an optional embodiment, the sub-weight is a value obtained by multiplying the quantization weight corresponding to the sub-weight by a scale coefficient of the sub-weight, and the quantization weight consists of -1, 0 and 1; a difference between a sum of the N sub-weights and the original weight is less than a preset threshold, or, a ratio of the sum of the N sub-weights to the original weight is less than a preset ratio.

In the technical solution provided by the embodiments of the present application, the original weight of the network layer is decomposed into N sub-weights, and the N sub-weights have been quantized. Compared to being convolved with an unquantized original weight, convolving the input data of the network layer with quantized N sub-weights respectively can reduce the consumption of computing resources and expand application scenarios of the deep neural network. Furthermore, the deep neural network includes multiple network layers, and the number of sub-weights obtained by decomposing the original weight of each network layer may be different, that is, the number N of the sub-weights obtained by decomposing the original weight of each network layer can be set according to actual demands, which greatly improves the flexibility of the deep neural network design and can flexibly balance the efficiency and performance of the network.

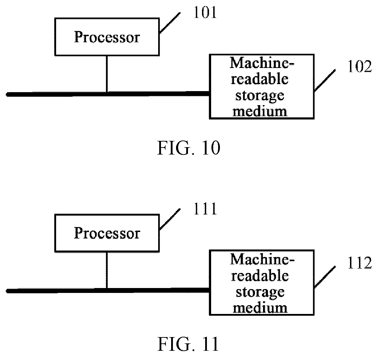

Corresponding to the above data processing method, embodiments of the present application further provides an electronic device, as shown in Figure 10, including a processor 101 and a machine-readable storage medium 102, the machine-readable storage medium 102 storing machine-executable instructions that can be processed by the processor 101, when executed, the machine-executable instructions cause the processor 101 to: implement the steps of any one of the above data processing methods.

Corresponding to the above network training method, embodiments of the present application further provides an electronic device, as shown in Figure 11, including a processor 111 and a machine-readable storage medium 112, the machine-readable storage medium 112 storing machine-executable instructions that can be processed by the processor 111, when executed, the machine-executable instructions cause the processor 111 to: implement the steps of any one of the above network training methods.

The machine-readable storage medium may include random a Random Access Memory (RAM) or a Non-Volatile Memory (NVM), such as at least one disk memory. Optionally, the machine-readable storage medium may further be at least one storage device located remotely from the aforementioned processor.

The processor can be a general-purpose processor, including a Central Processing Unit (CPU), a Network Processor (NP), etc.; it can further be a Digital Signal Processor (DSP), an Application Specific Integrated Circuit (ASIC), a Field-Programmable Gate Array (FPGA) or other programmable logic devices, a discrete gate or a transistor logic device, and a discrete hardware component.

In yet another embodiment provided by the present application, a computer-readable storage medium storing a computer program thereon is further provided, when executed by a processor, the computer program causes the processor to implement the steps of any one of the above data processing methods.

In yet another embodiment provided by the present application, a computer-readable storage medium storing a computer program thereon is further provided, when executed by a processor, the computer program causes the processor to implement the steps of any one of the above network training methods.

In yet another embodiment provided by the present application, a computer program product containing instructions is further provided, which, when running on a computer, the instructions cause the computer to carry out the steps of any one of the above data processing methods.

In yet another embodiment provided by the present application, a computer program product containing instructions is further provided, which, when running on a computer, the instructions cause the computer to carry out the steps of any one of the above network training methods.

The above embodiments can be implemented in whole or in part by software, hardware, firmware or any combination thereof. When being implemented with software, they can be implemented in whole or in part in the form of a computer program product. The computer program product includes one or more computer instructions. When the computer program instructions are loaded and executed on a computer, the processes or functions described in the embodiments of the present application are generated in whole or in part. The computer may be a general purpose computer, a special purpose computer, a computer network, or other programmable devices. The computer instructions may be stored in a computer-readable storage medium, or be transmitted from one computer-readable storage medium to another computer-readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any usable medium that can be accessed by a computer or a data storage device such as a server and a data center and the like that includes an integration of one or more available media. The usable media may be a magnetic media (such as a floppy disk, a hard disk, a magnetic tape), an optical media (such as DVD), or a semiconductor media (such as Solid State Disk (SSD)) and the like.

It should be noted that, relational terms such as first and second and the like herein are only used to distinguish an entity or operation from another entity or operation, and do not necessarily require or imply any such actual relationship or order between these entities or operations. Moreover, the terms "comprising", "including" or any other variations thereof are intended to encompass a non-exclusive inclusion such that a process, method, article or device that includes a series of elements include not only those elements, but also includes other elements not explicitly listed, or include other elements inherent to such a process, method, article or device. Without further limitation, elements defined by the phrase "comprising a..." do not preclude the presence of additional identical elements in a process, method, article or device that includes the mentioned elements.

The various embodiments in this description are described in a related manner. Each embodiment focuses on the differences from other embodiments, and the same and similar parts between the various embodiments can be referred to each other. Especially, for the embodiments of the system, the description is relatively simple because it is basically similar to the embodiment of the method, and the relevant points can be referred to the partial description of the embodiments of the method.

The above mentioned are only preferred embodiments of the present application and are not intended to limit the scope of protection of the present application. Any modification, equivalent replacement, improvement, etc. made within the spirit and principles of the present application shall be included in the scope of protection of the present application.

**Claims**

1. A data processing method, wherein the method comprises:

   obtaining input data of a network layer of a deep neural network, where an original weight of the network layer is decomposed into N sub-weights that have been quantization processed;
   convolving the input data with the N sub-weights respectively to obtain N intermediate data corresponding to the N sub-weights;
   summing the N intermediate data to obtain output data of the network layer.

2. The method according to claim 1, wherein the sub-weight is a value obtained by multiplying a quantization weight corresponding to the sub-weight by a first scale coefficient;
   the step of convolving the input data with the N sub-weights respectively to obtain N intermediate data corresponding to the N sub-weights comprises:

   performing quantization processing on the input data to obtain quantized data and a second scale coefficient corresponding to the input data;
   convolving the quantized data with quantization weights corresponding to the N sub-weights respectively to obtain N convolution data corresponding to the N sub-weights;
   multiplying each convolution data by the first scale coefficient and the second scale coefficient respectively to obtain N intermediate data corresponding to the N sub-weights.

3. The method according to claim 2, wherein the quantization weight consists of -1, 0 and 1;
   a difference between a sum of the N sub-weights and the original weight is less than a preset threshold, or, a ratio of the sum of the N sub-weights to the original weight is less than a preset ratio.

4. The method according to any one of claims 1 to 3, wherein the input data of the deep neural network is a first image, the output data of the deep neural network is a second image, and noise level of the first image is higher than that of the second image.

5. A network training method, wherein the method comprises:

   obtaining a training set, wherein the training set comprises sample data and expected data corresponding to the sample data;
   inputting the sample data into a first deep neural network to obtain first predicted data, wherein the first deep neural network comprises at least one network layer;
   determining a first loss value based on the expected data and the first predicted data;
   decomposing an original weight of each network layer into N sub-weights that have been quantization processed to obtain a second deep neural network if it is determined based on the first loss value that the first deep neural network is converged.

6. The method according to claim 5, wherein the method further comprises:
   adjusting a first parameter of the first deep neural network and re-executing the step of inputting the sample data into the first deep neural network to obtain the first predicted data if it is determined based on the first loss value that the first deep neural network is not converged; wherein the first parameter comprises the original weight.

7. The method according to claim 5, wherein after obtaining the second deep neural network, the method further comprises:

   inputting the sample data into the second deep neural network to obtain second predicted data;
   determining a second loss value based on the expected data and the second predicted data;
   ending the training of the second deep neural network if it is determined based on the second loss value that the second deep neural network is converged;
   adjusting a second parameter of the second deep neural network, and re-executing the step of inputting the sample data into the second deep neural network to obtain the second predicted data if it is determined based on the second loss value that the second deep neural network is not converged, wherein the second parameter comprises scale coefficients of the N sub-weights.

8. The method according to any one of claims 5 to 7, wherein the sub-weight is a value obtained by multiplying a quantization weight corresponding to the sub-weight by a scale coefficient of the sub-weight, and the quantization weight consists of -1, 0 and 1;
a difference between a sum of the N sub-weights and the original weight is less than a preset threshold, or, a ratio of the sum of the N sub-weights to the original weight is less than a preset ratio.

9. A data processing apparatus, wherein the apparatus comprises:

   an obtaining unit, configured for obtaining input data of a network layer of a deep neural network, where an original weight of the network layer is decomposed into N sub-weights that have been quantization processed;
   a convolution unit, configured for convolving the input data with the N sub-weights respectively to obtain N intermediate data corresponding to the N sub-weights;
   a summation unit, configured for summing the N intermediate data to obtain output data of the network layer.

10. The apparatus according to claim 9, wherein the sub-weight is a value obtained by multiplying a quantization weight corresponding to the sub-weight by a first scale coefficient;
the convolution unit is specifically configured for:

   performing quantization processing on the input data to obtain quantized data and a second scale coefficient corresponding to the input data;
   convolving the quantized data with quantization weights corresponding to the N sub-weights respectively to obtain N convolution data corresponding to the N sub-weights;
   multiplying each convolution data by the first scale coefficient and the second scale coefficient respectively to obtain N intermediate data corresponding to the N sub-weights.

11. The apparatus according to claim 10, wherein the quantization weight consists of -1, 0 and 1;
a difference between a sum of the N sub-weights and the original weight is less than a preset threshold, or, a ratio of the sum of the N sub-weights to the original weight is less than a preset ratio.

12. The apparatus according to any one of claims 9 to 11, wherein the input data of the deep neural network is a first image, the output data of the deep neural network is a second image, and noise level of the first image is higher than that of the second image.

13. A network training apparatus, wherein the apparatus comprises:

   an obtaining unit, configured for obtaining a training set, wherein the training set comprises sample data and expected data corresponding to the sample data;
   a first input unit, configured for inputting the sample data into a first deep neural network to obtain first predicted data, wherein the first deep neural network comprises at least one network layer;
   a first determining unit, configured for determining a first loss value based on the expected data and the first predicted data;
   a decomposing unit, configured for decomposing an original weight of each network layer into N sub-weights that have been quantization processed to obtain a second deep neural network if it is determined based on the first loss value that the first deep neural network is converged.

14. The apparatus according to claim 13, wherein the apparatus further comprises:
a first adjustment unit, configured for adjusting a first parameter of the first deep neural network and re-executing the step of inputting the sample data into the first deep neural network to obtain the first predicted data if it is determined based on the first loss value that the first deep neural network is not converged; wherein the first parameter comprises the original weight.

15. The apparatus according to claim 13, wherein the apparatus further comprises:

   a second input unit, configured for inputting the sample data into the second deep neural network to obtain second predicted data after obtaining the second deep neural network;
   a second determining unit, configured for determining a second loss value based on the expected data and the second predicted data;
   an ending unit, configured for ending the training of the second deep neural network if it is determined based on the second loss value that the second deep neural network is converged;

a second adjustment unit, configured for adjusting a second parameter of the second deep neural network, and re-executing the step of inputting the sample data into the second deep neural network to obtain the second predicted data if it is determined based on the second loss value that the second deep neural network is not converged, wherein the second parameter comprises scale coefficients of the N sub-weights.

16. The apparatus according to any one of claims 13 to 15, wherein the sub-weight is a value obtained by multiplying a quantization weight corresponding to the sub-weight by a scale coefficient of the sub-weight, and the quantization weight consists of -1, 0 and 1;

a difference between a sum of the N sub-weights and the original weight is less than a preset threshold, or, a ratio of the sum of the N sub-weights to the original weight is less than a preset ratio.

17. An electronic device, wherein the electronic device comprises a processor and a machine-readable storage medium, the machine-readable storage medium storing machine-executable instructions that can be executed by the processor, when executed, the machine-executable instructions causes the processor to implement the method steps according to any one of claims 1 to 4 or claims 5 to 8.

18. A computer-readable storage medium, wherein the computer-readable storage medium stores a computer program product therein, when executed by a processor, the computer program product causes the processor to implement the method steps according to any one of claims 1 to 4 or claims 5 to 8.

19. A computer program product containing instructions, when running on a computer, the instructions cause the computer to carry out the method steps according to any one of claims 1 to 4 or claims 5 to 8.

obtaining input data of a network layer of a deep neural network, an original weight of the network layer is decomposed into N sub-weights that have been quantization processed $\quad$ S11

convolving the input data with the N sub-weights respectively to obtain N intermediate data corresponding to the N sub-weights $\quad$ S12

summing the N intermediate data to obtain output data of the network layer $\quad$ S13

FIG. 1

FIG. 2

obtaining input data of a network layer of a deep neural network, an original weight of the network layer is decomposed into N sub-weights that have been quantization processed, the sub-weight is a value obtained by multiplying a quantization weight corresponding to the sub-weight by the first scale coefficient

S31

performing quantization processing on the input data to obtain quantized data and a second scale coefficient corresponding to the input data

S32

convolving the quantized data with the quantization weights corresponding to the N sub-weights to obtain N convolution data corresponding to the N sub-weights

S33

multiplying each convolution data by the first scale coefficient and the second scale coefficient respectively to obtain N intermediate data corresponding to the N sub-weights

S34

summing the N intermediate data to obtain output data of the network layer

S35

FIG. 3

FIG. 4

obtaining a training set, which includes sample data and expected data corresponding to the sample data — S51

inputting the sample data into a first deep neural network to obtain first predicted data, wherein the first deep neural network includes at least one network layer — S52

determining a first loss value based on the expected data and the first predicted data — S53

decomposing an original weight of each network layer into N sub-weights that have been quantization processed to obtain a second deep neural network if it is determined based on the first loss value that the first deep neural network is converged — S54

FIG. 5

obtaining a training set, which includes sample data and expected data corresponding to the sample data — S61

inputting the sample data into a first deep neural network to obtain first predicted data, wherein the first deep neural network includes at least one network layer — S62

determining a first loss value based on the expected data and the first predicted data — S63

decomposing an original weight of each network layer into N sub-weights that have been quantization processed to obtain a second deep neural network if it is determined based on the first loss value that the first deep neural network is converged — S64

adjusting a first parameter of the first deep neural network if it is determined based on the first loss value that the first deep neural network is not converged, wherein the first parameter includes the original weight — S65

FIG. 6

| | |
|---|---|
| obtaining a training set, which includes sample data and expected data corresponding to the sample data | S71 |
| ↓ | |
| inputting the sample data into a first deep neural network to obtain first predicted data, wherein the first deep neural network includes at least one network layer | S72 |
| ↓ | |
| determining a first loss value based on the expected data and the first predicted data | S73 |
| ↓ | |
| decomposing an original weight of each network layer into N sub-weights that have been quantization processed to obtain a second deep neural network if it is determined based on the first loss value that the first deep neural network is converged | S74 |
| ↓ | |
| inputing the sample data into the second deep neural network to obtain second predicted data | S75 |
| ↓ | |
| determining a second loss value based on the expected data and the second predicted data | S76 |
| ↓ | |
| ending a training of the second deep neural network if it is determined based on the second loss value that the second deep neural network is converged | S77 |
| ↓ | |
| adjusting a second parameter of the second deep neural network if it is determined based on the second loss value that the second deep neural network is not converged, wherein the second parameter includes scale coefficients of the N sub-weights | S78 |

FIG. 7

Obtaining module 81 — Convolution unit 82 — Summation unit 83

FIG. 8

Obtaining module 91 — First input unit 92 — First determining unit 93 — Decomposing unit 94

FIG. 9

Processor — 101

Machine-
readable
storage
medium — 102

FIG. 10

Processor — 111

Machine-
readable
storage
medium — 112

FIG. 11

<table>
<tr><td colspan="2" align="center">**INTERNATIONAL SEARCH REPORT**</td><td colspan="2">International application No.<br><br>**PCT/CN2022/143324**</td></tr>
<tr><td colspan="4">**A.    CLASSIFICATION OF SUBJECT MATTER**<br>G06N3/04(2023.01)i<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br>G06N</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>CNABS, CNTXT, ENTXT, VEN, CNKI, IEEE: 输入, 权重, 权值, 卷积, 子权重, 分解, 量化, 求和, 训练, input, weight, convolut+, subweight, decomposit+, quantiz+, sum, training</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>PX</td><td colspan="2">CN 114298280 A (HANGZHOU HIKVISION DIGITAL TECHNOLOGY CO., LTD.) 08 April 2022 (2022-04-08)<br>claims 1-10, and description, paragraphs 143-177</td><td>1-19</td></tr>
<tr><td>X</td><td colspan="2">CN 110647974 A (HANGZHOU HIKVISION DIGITAL TECHNOLOGY CO., LTD.) 03 January 2020 (2020-01-03)<br>description, paragraphs 64-123</td><td>1-4, 9-12, 17-19</td></tr>
<tr><td>X</td><td colspan="2">CN 112541159 A (HUAWEI TECHNOLOGIES CO., LTD.) 23 March 2021 (2021-03-23)<br>description, paragraphs 112-172</td><td>5-8, 13-19</td></tr>
<tr><td>A</td><td colspan="2">CN 111144457 A (BEIJING DAJIA INTERCONNECTION INFORMATION TECHNOLOGY CO., LTD.) 12 May 2020 (2020-05-12)<br>entire document</td><td>1-19</td></tr>
<tr><td>A</td><td colspan="2">CN 111461302 A (HANGZHOU JIA'NAN YUNZHI INFORMATION TECHNOLOGY CO., LTD.) 28 July 2020 (2020-07-28)<br>entire document</td><td>1-19</td></tr>
<tr><td>A</td><td colspan="2">CN 113095486 A (TSINGHUA UNIVERSITY) 09 July 2021 (2021-07-09)<br>entire document</td><td>1-19</td></tr>
<tr><td colspan="4">☑ Further documents are listed in the continuation of Box C.      ☑ See patent family annex.</td></tr>
<tr><td colspan="2">*      Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed</td><td colspan="2">"T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family</td></tr>
<tr><td colspan="2">Date of the actual completion of the international search<br><br>**17 March 2023**</td><td colspan="2">Date of mailing of the international search report<br><br>**22 March 2023**</td></tr>
<tr><td colspan="2">Name and mailing address of the ISA/CN<br><br>**China National Intellectual Property Administration (ISA/CN)**<br>**China No. 6, Xitucheng Road, Jimenqiao, Haidian District, Beijing 100088**</td><td colspan="2">Authorized officer</td></tr>
<tr><td colspan="2">Facsimile No. **(86-10)62019451**</td><td colspan="2">Telephone No.</td></tr>
</table>

Form PCT/ISA/210 (second sheet) (July 2022)

**INTERNATIONAL SEARCH REPORT**

International application No.

**PCT/CN2022/143324**

| C. | DOCUMENTS CONSIDERED TO BE RELEVANT | |
|---|---|---|
| Category* | Citation of document, with indication, where appropriate, of the relevant passages | Relevant to claim No. |
| A | CN 113222099 A (STREAM COMPUTING INC.) 06 August 2021 (2021-08-06) entire document | 1-19 |

Form PCT/ISA/210 (second sheet) (July 2022)

INTERNATIONAL SEARCH REPORT
Information on patent family members

International application No.

**PCT/CN2022/143324**

| Patent document cited in search report | | | Publication date (day/month/year) | Patent family member(s) | | | Publication date (day/month/year) |
|---|---|---|---|---|---|---|---|
| CN | 114298280 | A | 08 April 2022 | None | | | |
| CN | 110647974 | A | 03 January 2020 | WO | 2020001401 | A1 | 02 January 2020 |
| | | | | US | 2021271973 | A1 | 02 September 2021 |
| | | | | EP | 3816866 | A1 | 05 May 2021 |
| CN | 112541159 | A | 23 March 2021 | WO | 2022068623 | A1 | 07 April 2022 |
| CN | 111144457 | A | 12 May 2020 | None | | | |
| CN | 111461302 | A | 28 July 2020 | None | | | |
| CN | 113095486 | A | 09 July 2021 | None | | | |
| CN | 113222099 | A | 06 August 2021 | None | | | |

Form PCT/ISA/210 (patent family annex) (July 2022)

**EP 4 459 504 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111635076